# EUROPÄISCHE PATENTSCHRIFT

(11) **EP 0 506 897 B1**
(45) Veröffentlichungstag und Bekanntmachung des Hinweises auf die Patenterteilung: **06.12.1995**
(21) Anmeldenummer: 91915902.0
(22) Anmeldetag: 18.09.1991
(51) Int. Cl.: G01N 27/406

(54) **GASMESSFÜHLER, INSBESONDERE ZUR BESTIMMUNG DES SAUERSTOFFGEHALTES IN ABGASEN VON BRENNKRAFTMASCHINEN**
GAS MEASUREMENT PROBE, ESPECIALLY FOR DETERMINING THE OXYGEN CONTENT IN INTERNAL COMBUSTION ENGINE EXHAUST GASES
CAPTEUR DE GAZ, SERVANT EN PARTICULIER A DETERMINER LA TENEUR EN OXYGENE DANS LES GAZ D'ECHAPPEMENT DES MOTEURS A COMBUSTION INTERNE

(30) Priorität: 26.10.1990 DE 4034072; 09.08.1991 DE 4126378
(43) Veröffentlichungstag der Anmeldung: 07.10.1992
(73) Patentinhaber: ROBERT BOSCH GMBH, 70442 Stuttgart (DE)
(72) Erfinder: WEYL, Helmut, D-7141 Schwieberdingen (DE); FRIES, Romuald, D-7257 Ditzingen-Heimerdingen (DE)
(86) Internationale Anmeldenummer: DE9100739
(87) Internationale Veröffentlichungsnummer: WO9208127

(56) Entgegenhaltungen:
- EP-A- 0 087 626
- EP-A- 0 415 007
- DE-A- 2 702 578
- DE-A- 2 707 062
- DE-A- 3 509 197
- DE-A- 3 537 051
- US-A- 4 786 399

## Beschreibung

### Stand der Technik

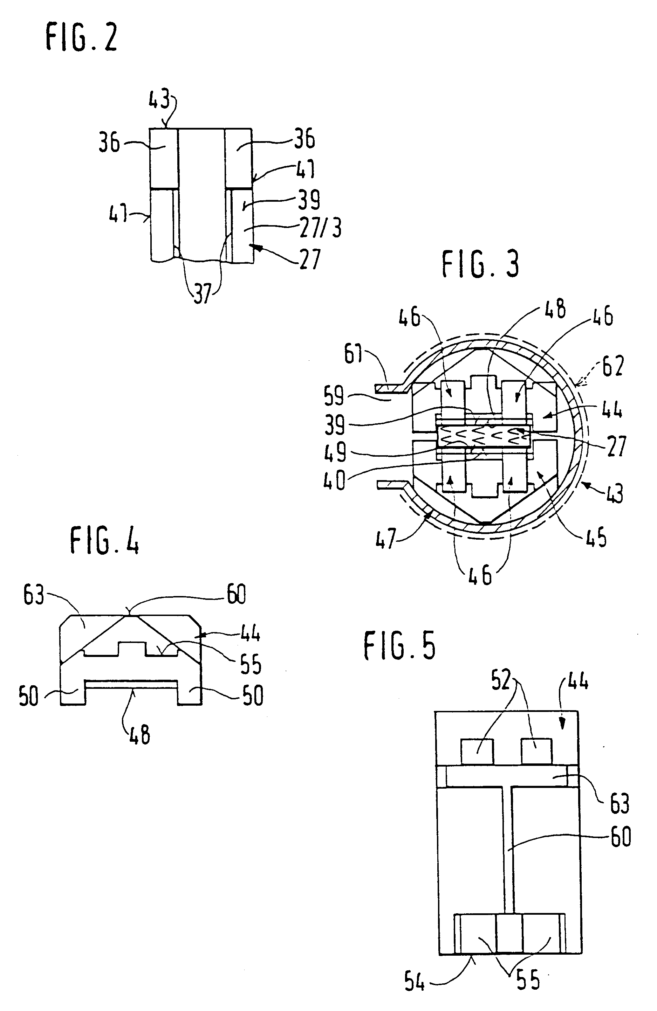

Die Erfindung geht aus von einem Gasmeßfühler nach der Gattung des Hauptanspruchs. Bei einem aus der EP 0 087 626 B1 (Figuren 4 bis 6) bekannten gattungsgemäßen Gasmeßfühler weist dessen längliches, planares Sensorelement an seinem anschlußseitigen Abschnitt dünne, aus einem Platinmetall bestehende Kontaktflächen auf; beim Einstecken dieses anschlußseitigen Abschnitts des Sensorelementes in den anschlußseitigen Verbindungsstecker, der mittels unter mechanischer Vorspannung stehenden, und als Gegenkontakt dienenden metallischen Federelementen auf die Kontaktflächen des Sensorelementes oder eines etwaigen schichtförmigen Heizelementes drückt, können diese Kontaktflächen beschädigt und infolge dieser Beschädigungen Fehlanzeigen bzw. Fehlsteuerungen verursacht werden. Sofern derartige Kontaktflächen auf Sensorelementen oder Federelemente des Verbindungssteckers mit einer dünnen korrosionsfesten Beschichtung (z. B. aus Gold) versehen sind, können diese Kontaktflächen und Beschichtungen schon beim Zusammenstecken von Sensorelement und Verbindungsstecker beschädigt oder zerstört werden und damit die einwandfreie Funktion des Gasmeßfühlers beeinträchtigen.

### Vorteile der Erfindung

Der erfindungsgemäße Gasmeßfühler mit den kennzeichnenden Merkmalen des Hauptanspruchs hat demgegenüber den Vorteil, daß anläßlich des Zusammenbaus von Sensorelement und anschlußseitigem Verbindungsstecker weder die Kontaktflächen des Sensorelementes noch etwaige korrosionsbeständige Beschichtungen auf den Kontaktteilen beschädigt werden und daß demzufolge Beeinträchtigungen des Gasmeßfühlers in diesem Bereich weitestgehend ausgeschlossen werden.

Als weiterer Vorteil ist anzusehen, daß die für die Kontaktierung des planaren Sensorelementes beteiligten Einzelteile des anschlußseitigen Verbindungssteckers einfach herstellbar und montierbar sind.

Durch die in den Unteransprüchen aufgeführten Maßnahmen sind vorteilhafte Weiterbildungen und Verbesserungen des im Hauptanspruch angegebenen Gasmeßfühlers möglich; dieses trifft insbesondere für Verbindungsstecker derartiger Gasmeßfühler zu, die auf mindestens einer der beiden Großflächen des Sensors drei ausreichend groß bemessene Kontaktflächen haben und bei denen dennoch die Abstände zwischen den Kontaktflächen des Sensors und zwischen den Kontaktteilen des Verbindungssteckers hinreichend groß und damit sicher sind.

### Zeichnung

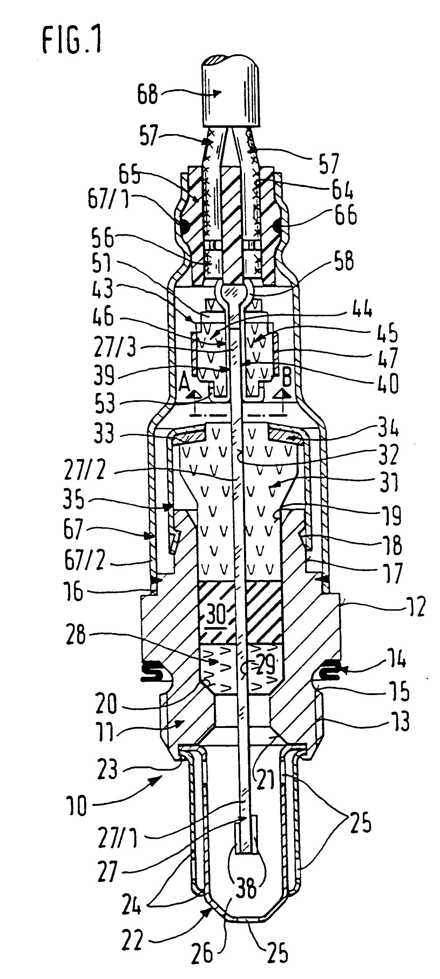

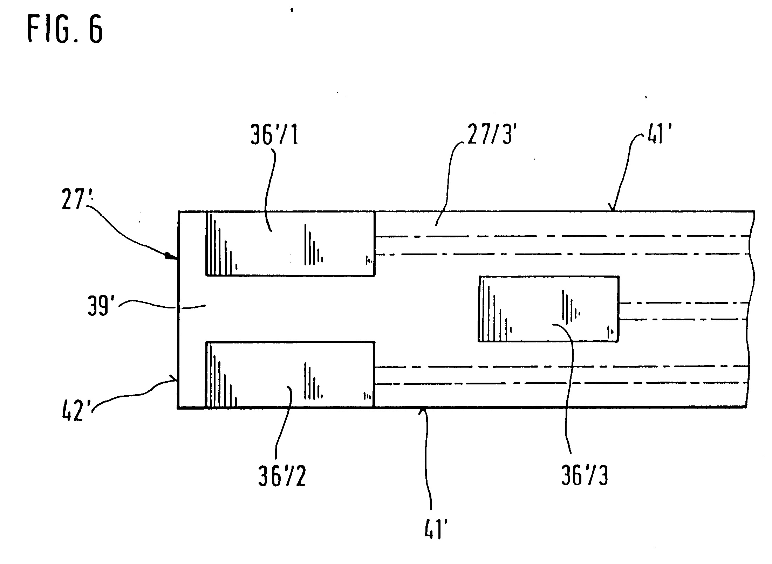

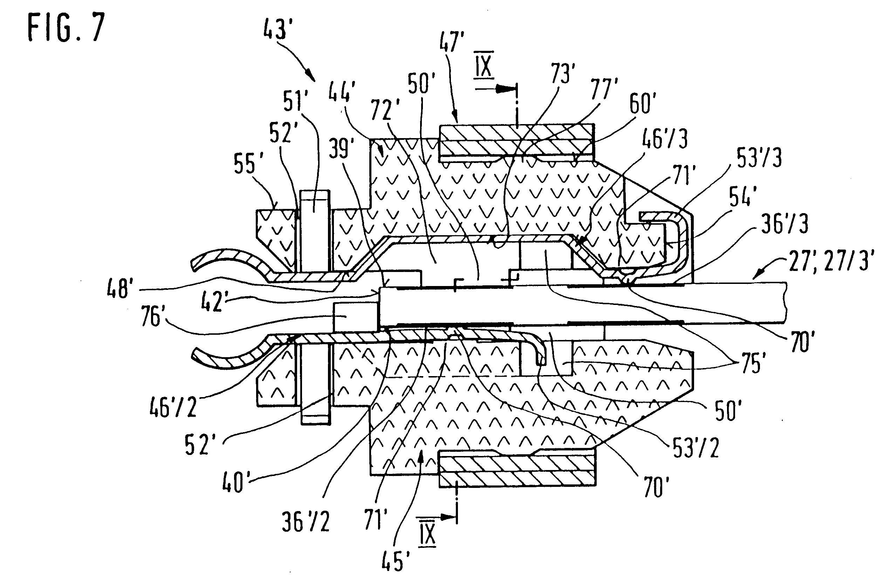

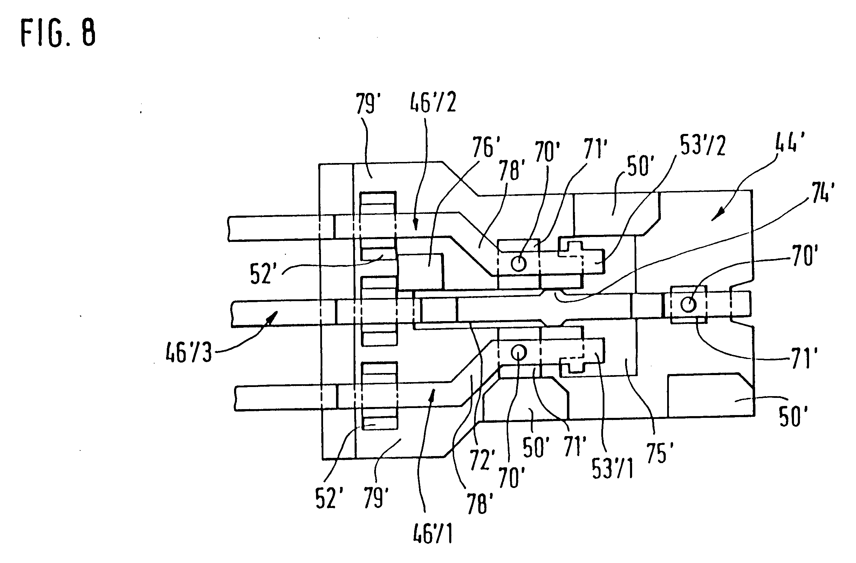

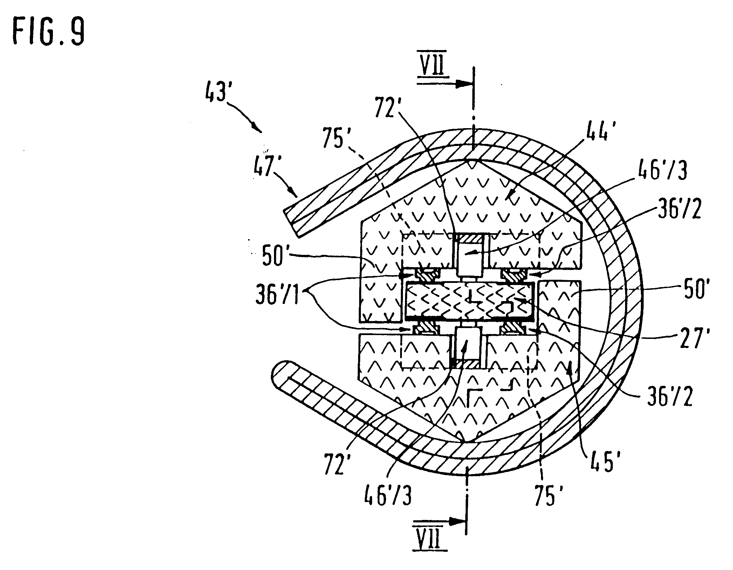

Ein Ausführungsbeispiel der Erfindung ist in der Zeichnung dargestellt und in der nachfolgenden Beschreibung näher erläutert. Es zeigen Figur 1 einen Längsschnitt durch einen vergrößert dargestellten Gasmeßfühler nach der Erfindung, Figur 2 die vergrößert dargestellte Draufsicht auf eine zwei Kontaktflächen tragende Großfläche eines anschlußseitigen Endabschnitts eines länglichen, planaren Sensors, Figur 3 eine vergrößert dargestellte Ansicht des im Gasmeßfühler nach Figur 1 enthaltenen Verbindungssteckers in Richtung A/B (90 Grad gedreht), Figur 4 eine Ansicht auf einen Kontaktteil-Träger in Richtung Anschlußseite des Verbindungssteckers nach Figur 3, Figur 5 die Draufsicht auf die vom Sensor wegweisende Rückseite des Kontaktteil-Trägers nach Figur 4, Figur 6 eine vergrößert dargestellte Draufsicht auf eine mit drei Kontaktflächen versehene Großfläche eines Sensors für den Verbindungsstecker gemäß Figur 7, Figur 7 eine vergrößerte Darstellung eines Längsschnittes durch einen Verbindungsstecker, der für planare Sensoren mit bis zu drei Kontaktflächen pro Großseite vorgesehen ist (siehe Schnittlinie VII-VII in Figur 9), Figur 8 die vergrößert dargestellte Draufsicht auf die mit Kontaktteilen versehene Vorderseite eines Kontaktteil-Trägers (bzw. einer Gegenwand) des Verbindungssteckers nach Figur 7 und Figur 9 einen Querschnitt durch den Verbindungsstecker entlang der Linie IX-IX nach Figur 7.

### Beschreibung der Ausführungsbeispiele

Der in der Figur 1 der Zeichnung dargestellte Gasmeßfühler 10 hat ein rohrförmiges Metallgehäuse 11, das an seiner Außenseite ein Schlüsselsechskant 12 und ein Gewinde 13 als Mittel für den Einbau des Gasmeßfühlers 10 in eine nicht dargestellte Meßgasleitung aufweist; für den abdichtenden Einbau dieses Metallgehäuses 11 in der Meßgasleitung dient ein Dichtring 14, welcher in einer zwischen Schlüsselsechskant 12 und Gewinde 13 angeordneten Ringnut 15 unverlierbar festgelegt ist. Anschlußseits vom Schlüsselsechskant 12 ist ein koaxialer erster Längsabschnitt 16 kleineren Durchmessers an das Metallgehäuse 11 angeformt und diesem ersten Längsabschnitt 16 folgt anschlußseits noch ein zweiter Längsabschnitt 17, der einen noch weiter reduzierten Durchmesser hat; dieser zweite Längsabschnitt 17 des Metallgehäuses 11 ist auf seiner Außenseite mit einer Ringnut 18 versehen.

Das Metallgehäuse 11 weist eine Längsbohrung 19 mit einem koaxialen Absatz 20 auf, der der Meßgasseite des Gasmeßfühlers 10 abgewendet ist; der meßgasseitige Endbereich dieser Längsbohrung 19 ist zu einer Aufbohrung 21 erweitert.

In der Aufbohrung 21 der Längsbohrung 19 des Metallgehäuses 11 ist ein Schutzrohr 22 mittels einer Bördelung 23 festgelegt. Dieses Schutzrohr 22 besitzt in seinem sogenannten Doppelmantel 24 eine Anzahl von Ein- und Austrittsöffnungen 25 für das Meßgas; der vom Schutzrohr 22 umfaßte Raum ist der Meßraum 26 des Gasmeßfühlers 10.

In diesen Meßraum 20 ragt mit Abstand zum Schutzrohr 22 der meßgasseitige Abschnitt 27/1 eines Sensors 27: dieser Sensor 27 ist von länglicher, planarer Form und erstreckt sich durch die Längsbohrung 19 des Metallgehäuses 11. Dieser Sensor 27 wird in der Längsbohrung 19 des Metallgehäuses 11 elektrisch isoliert gehalten:

Zu dieser Halterung des Sensors 27 in der Längsbohrung 19 des Metallgehäuses 11 dienen ein erstes elektrisch isolierendes Keramikteil 28, das meßgasseits auf dem Absatz 20 in der Längsbohrung 19 des Metallgehäuses 11 aufliegt und einen Längsdurchbruch 29 zur seitlichen Fixierung des Sensors 27 aufweist, dann eine paketartige Dichtung 30, die am ersten Keramikteil 28 anschlußseits anliegt, den Sensor 27 umfaßt und bis an die Wand der Längsbohrung 19 des Metallgehäuses 11 reicht und aus einem elektrisch isolierenden Material wie z. B. Speckstein besteht, und dann noch aus einem zweiten elektrisch isolierenden Keramikteil 31, das wiederum anschlußseits auf der Dichtung 30 aufsteht, den Querschnitt der Längsbohrung 19 des Metallgehäuses 11 ausfüllt, einen Längsdurchbruch 32 zur seitlichen Fixierung des Sensors 27 besitzt und anschlußseits aus der Längsbohrung 19 des Metallgehäuses 11 herausragt; der anschlußseitige Abschnitt des zweiten Keramikteils 31 ist bevorzugterweise kopfförmig im Durchmesser vergrößert und weist anschlußseits eine koaxiale, ringförmige Schulter 33 auf. Auf dieser Schulter 33 des zweiten Keramikteils 31 liegt eine unter mechanischer Vorspannung stehende Tellerfeder 34 auf, die dieses zweite Keramikteil 31, die Dichtung 30 und das erste Keramikteil 28 gegen den Absatz 20 in der Längsbohrung 19 des Metallgehäuses 11 drückt; gegebenenfalls kann zwischen dem Absatz 20 in der Längsbohrung 19 des Metallgehäuses 11 und dem ersten Keramikteil 28 auch ein (nicht dargestellter) Dichtring angeordnet sein. Als Gegenlager, welches auf der Peripherie der Tellerfeder 34 aufliegt, dient eine rohrförmige Haltekappe 35, die mit ihrem meßgasseitigen Endabschnitt in der Ringnut 18 des zweiten Längsabschnittes 17 auf der Außenseite des Metallgehäuses 11 in bekannter Weise (z. B. durch nicht bezeichnete Einrastnasen) festgelegt ist.

Der anschlußseits aus der Dichtung 30 herausragende Bereich des Sensors 27 ist als anschlußseitiger Abschnitt 27/2 bezeichnet und ragt mit seinem anschlußseitigen Endabschnitt 27/3 noch aus dem zweiten Keramikteil 31 heraus. Auf diesem anschlußseitigen Endabschnitt 27/3 des Sensors 27 sind - wie in Figur 2 dargestellt - zwei Kontaktflächen 36 aufgebracht, die aus elektrisch leitfähigem, korrosionsresistentem Material, wie z. B. Platin oder Gold bestehen und über Leiterbahnen 37 mit mindestens einem auf dem meßgasseitigen Abschnitt 27/1 des Sensors 27 befindlichen Sensorelement 38 oder (nicht dargestelltem) Heizelement, Temperaturfühler oder ähnlichem in Verbindung stehen; diese beiden Kontaktflächen 36 sind in bevorzugter Weise auf mindestens einer der beiden Großflächen 39, 40 des Sensors 27 mittels bekannter Verfahren (z. B. Siebdruck) und aus bekannten Stoffen (z. B. Platin) hergestellt. Die längs am Sensor 27 verlaufenden Schmalseiten sind mit 41 und die anschlußseitige schmale Stirnseite mit 42 bezeichnet. - Das Sensorelement 38, das in der Figur 1 nur angedeutet wurde, kann von unterschiedlicher Wirkungsweise sein (siehe z. B. DE 29 28 496 C2, DE 30 17 947 C2, DE 28 26 515 C2, DE 28 55 012 A1, DE 29 09 452 C2, DE 29 08 916 C2).

Auf den anschlußseitigen Endabschnitt 27/3 mit den Kontaktflächen 36 des Sensors 27 ist ein Verbindungsstecker 43 aufgeschoben (siehe Figur 3). Dieser Verbindungsstecker 43 setzt sich zusammen aus einem Kontaktteil-Träger 44, einer Gegenwand 45 zum Kontaktteil-Träger 44, Kontaktteilen 46 und einem Federelement 47. Der Kontaktteil-Träger 44 und die Gegenwand 45 sind elektrisch isolierende Bauteile aus Keramik und sind jeweils mit ihrer Vorderseite 48 bzw. 49 einer Großfläche 39 bzw. 40 des Sensors 27 zugewendet und parallel dazu angeordnet; der Kontaktteil-Träger 44 und die Gegenwand 45 des Verbindungssteckers 43 haben Abstand voneinander. Auf der Vorderseite 48 des Kontaktteil-Trägers 44 (siehe Figur 4) sind seitlich Führungsstege 50 mit angeformt, zwischen denen der anschlußseitige Endabschnitt 27/3 des Sensors 27 mit seinen beiden Schmalseiten 41 fixiert ist. Auf der Vorderseite 48 des Kontaktteil-Trägers 44 verlaufen in diesem Ausführungsbeispiel in Längsrichtung zwei voneinander beabstandete Kontaktteile 46, die aus streifenförmigem Blech bestehen und am Kontaktteil-Träger 44 festgelegt sind; zur Festlegung jedes Kontaktteiles 46 können beispielsweise mit an das Kontaktteil 46 angeformte fingerförmige Blechabschnitte 51 dienen, die in Durchbrüchen 52 des Kontaktteil-Trägers 44 verankert sein können (siehe Figuren 1 und 5). Die meßgasseitigen Endabschnitte 53 der beiden Kontaktteile 46 sind um die meßgasseitige Stirnfläche 54 des Kontaktteil-Trägers 44 bis auf die Rückseite 55 des Kontaktteil-Trägers 44 herumgebogen. Anschlußseits sind die Kontaktteile 46 jeweils streifenförmig verlängert und an ihrem diesseitigen Endabschnitt als Verbindungsstellen 56 für Anschlußleiter 57 ausgebildet; die Verbindungsstellen 56 sind in diesem Ausführungsbeispiel als mit Längsspalt versehene (nicht bezeichnete) Hülsen ausgebildet, können aber auch von anderer Gestalt sein. Eine Auslenkung 58 des zwischen Verbindungsstelle 56 und Kontaktteil-Träger 44 befindlichen Bereichs jedes Kontaktteiles 46 kann zum Längenausgleich im Falle von Wärmeausdehnungen zweckdienlich sein. Die Kontaktteile 46 sind mit einer (nicht dargestellten) elektrisch gut leitenden, korrosionsresistenten Beschichtung (z. B. aus Gold) versehen, die aber nur wenige »m dick ist.

Auf der zweiten Großfläche 40 des anschlußseitigen Endabschnitts 27/3 des Sensors 27 liegt die Gegenwand 45 an, die zweckmäßigerweise von gleicher Konfiguration sein sollte wie der Kontaktteil-Träger 44. Im dargestellten Ausführungsbeispiel ist auch diese Gegenwand 45 mit Kontaktteilen 46 versehen, welche mit Kontaktflächen 36 auf der zweiten Großfläche 40 des anschlußseitigen Endabschnitts 27/3 des Sensors 27 angeordnet sind; im Falle, daß auf der zweiten Großfläche 40 des Sensors 27 keine Kontaktflächen 36 vorhanden sind, kann natürlich auf Kontaktteile 46 verzichtet werden.

Der Kontaktteil-Träger 44, die Gegenwand 45 und der zwischen beiden angeordnete anschlußseitige Endabschnitt 27/3 des Sensors 27 werden gemeinsam von einem ringartigen Federelement 47 umfaßt und zusammengehalten; dieses Federelement 47 hat in seiner Umfangserstreckung eine Unterbrechung 59 und liegt mechanisch vorgespannt auf mindestens je einer Erhöhung 60, die jeweils auf der Rückseite 55 des Kontaktteil-Trägers 44 und der Gegenwand 45 mit angeformt sind. Im vorliegenden Ausführungsbeispiel besteht das ringartige Federelement aus Streifenmaterial und kann an seinen zur Unterbrechung 59 weisenden Endabschnitten 61 nach außen hin aufgebogen sein. Diese Endabschnitte 61 werden beim Einschieben des anschlußseitigen Endabschnitts 27/3 des Sensors 27 mittels eines nicht dargestellten Hilfswerkzeuges auseinander gedrückt; dadurch, daß das ringartige Federelement 47 dann nicht mehr fest auf dem Kontaktträger 44 und der Gegenwand 45 aufliegt, kann der Verbindungsstecker 43 ohne Beschädigung der Beschichtung der Kontaktteile 46 und der Kontaktflächen 36 auf den anschlußseitigen Endabschnitt 27/3 des Sensors 27 aufgeschoben werden. Anstelle der vorstehend beschriebenen, einen Querspalt bildenden Endabschnitte 61 des ringartigen Federelementes 47 können sich bei einer anderen (nicht dargestellten) Ausführungsform des Federelementes die mit nach außen aufgebogenen Endabschnitten versehenen Endbereiche des Federelementes überlappen. Nach dem Einführen des Sensors 27 in den Verbindungsstecker 43 wird das genannte Hilfswerkzeug wieder entfernt und damit die mechanische Spannung des Federelementes 47 auf den Kontaktteil-Träger 44 und die Gegenwand 45 mit dem von beiden eingeschlossenen Bereich des Sensors 27 wirken lassen. Zur Verstärkung der Federwirkung kann im Bedarfsfalle koaxial auf das streifenförmige Federelement 47 ein zweites (strichpunktiert dargestelltes) Federelement 62 geschoben werden, das ebenfalls einen (nicht bezeichneten) Querspalt aufweist und mit seinen (nicht bezeichneten) Endbereichen bis zu den Endabschnitten 61 des ersten Federelementes 47 reichen kann. Auf den Rückseiten 55 des Kontaktteil-Trägers 44 und der Gegenwand 45 ist jeweils ein querliegender Vorsprung 63 mit angeformt, der zur Fixierung und als Anschlag für das Federelement 47, gegebenenfalls auch für das zweite Federelement 62 mit dient.

Die Verbindungsstellen 56 von Kontaktteilen 46 und Anschlußleitern 57 sind jeweils in einem Durchgangsloch 64 eines elastischen, stopfenartigen Formteils 65 eng umfaßt, das aus einem warmfesten Material, wie z. B. PTFE besteht und auf seinem Umfang in einer (nicht bezeichneten) Ringnut einen O-Ring 66 aus einem elastischeren Material aufweist; der O-Ring 66 ragt dabei mit seinem Außendurchmesser aus der Oberfläche des Formteils 65 koaxial hervor. Dieses Formteil 65 mit dem O-Ring 66 wird von einem anschlußseitigen Längsabschnitt 67/1 einer Metallhülse 67 umfaßt und zusammengepreßt, was sowohl eine Abdichtung zwischen dem Metallhülsen-Längsabschnitt 67/1 und dem Formteil 65 als auch die Abdichtung zwischen den Anschlußleitern 57 und dem Formteil 65 bewirkt; der O-Ring 66 sorgt für eine besonders zuverlässige Abdichtung zwischen dem Formteil 65 und dem Metallhülsen-Längsabschnitt 67/1. Die Metallhülse 67 ist mit ihrem meßgasseitigen Längsabschnitt 67/2 auf den ersten Längsabschnitt 16 des Metallgehäuses 11 aufgeschoben und daran durch Schweißen oder ähnlichem befestigt; die Metallhülse 67 ist stufenförmig gestaltet und paßt sich mit unterschiedlichen Durchmesserbereichen den Gegebenheiten der darin enthaltenen Bauteile des Gasmeßfühlers 10 an.

Die anschlußseits aus dem Formteil 65 herausragenden Anschlußleiter 57, die eine (nicht gekennzeichnete) Isolierung haben, führen gemeinsam durch einen Isolierschlauch 68.

Ergänzend sei erwähnt, daß unter dem Ausdruck Sensorelement 38 insbesondere Gasmeßelemente zu verstehen sind, von denen mindestens eines auf dem Sensor 27 angeordnet ist, aber auch mehrere darauf aufgebracht sein können; als weitere Sensorelemente 38 können zusätzlich aber auch noch Temperaturfühler, Feuchtigkeitsfühler, Druckfühler o. ä. auf dem Sensor 27 mit aufgebracht sein. Neben dem mindestens einem Sensorelement 38 werden oft auch auf dem Sensor 27 schichtförmige Heizelemente mit vorgesehen, gegebenenfalls können im Verlaufe der Leiterbahnen 37 auch noch schichtförmige Widerstände bestimmter Charakteristik mit eingebaut werden.

Im Verlaufe der Weiterentwicklung von Gasmeßfühlern hat sich ergeben, daß für besonders präzise Regelungen von Abgasen und Kraftstoff- bzw. Luftzumessungen für Kraftfahrzeug-Motoren Sensoren 27′ mit mehreren Sensorelementen und gegebenenfalls mit Heizelement(en) zweckmäßig sein können; derartige planare Sensoren 27′ benötigen auf ihrem anschlußseitigen Endabschnitt 27/3′ auf den beiden Großflächen 39′ bzw. 40′ häufig nicht nur jeweils zwei Kontaktflächen, sondern auch bis zu drei Kontaktflächen 36′ (siehe Figuren 6 und 7). Diese Kontaktflächen 36′ sollen zwecks lagesicherer Kontaktierung im zugehörigen Verbindungsstecker 43′ (siehe Figuren 7 bis 9) möglichst großflächig sein, aber trotzdem zur Vermeidung von Nebenschlüssen genügend Abstand voneinander haben; der Verbindungsstecker 43′ muß dabei in seinen Abmessungen derart beschränkt bleiben, daß er weiterhin den problemlosen Einbau in den Gasmeßfühler erlaubt.

Die drei auf einer Großfläche 39′, 40′ derartiger Sensoren 27′ schichtförmig aufgebrachten Kontaktflächen 36′ sind in der Weise angeordnet, daß jeweils eine dieser Kontaktflächen 36′/1, 36′/2 nahe der anschlußseitigen Stirnfläche 42′ und entlang einer der Schmalseiten 41′ des Sensors 27′ liegt und die dritte Kontaktfläche 36′/3 über einer gedachten, längs zwischen den beiden anderen Kontaktflächen 36′/1 und 36′/2 verlaufenden Mittellinie aufgebracht ist, und zwar in Richtung des meßgasseitigen Abschnittes des Sensors 27′ und mit Abstand zu den beiden anderen Kontaktflächen 36′/1, 36′/2. Die Breite der einzelnen Kontaktflächen 36′ entspricht bevorzugterweise etwa einem Drittel der Breite des Sensors 27′; der Abstand zwischen den stirnseitennahen Kontaktflächen 36′/1, 36′/2 und der dritten Kontaktfläche 36′/3 beträgt möglichst mehr als 2 mm. Die für derartige Kontaktflächen 36′ verwendeten Stoffe sind bekannt und nicht Gegenstand vorliegender Schutzrechtsanmeldung; zumeist wird die Oberfläche derartiger Kontaktflächen 36′ mit einer elektrisch leitenden, korrosionsfesten Beschichtung (z.B. aus Edelmetall) versehen. Die an den einzelnen Kontaktflächen 36′ angeschlossenen Leiterbahnen, die zu den (nicht dargestellten) Sensoren bzw. Heizelementen führen, sind in der Figur 6 strichpunktiert angedeutet.

Der für den vorstehend beschriebenen Sensor 27′ vorgesehene, in den Figuren 7 bis 9 gezeigte, Verbindungsstecker 43′ entspricht mit vielen Merkmalen dem in den Figuren 1, 3 bis 5 dargestellten Verbindungsstecker 43: Dieser Verbindungsstecker 43′ hat nämlich auch einen Kontaktteil-Träger 44′ und eine Gegenwand 45′, jeweils mit den Kontaktteilen 46′, und ein unter mechanischer Vorspannung stehendes, ringartiges Federelement 47′, das den Kontaktteil-Träger 44′ und die Gegenwand 45′ mit den jeweiligen Kontaktteilen 46′ auf den mit Kontaktflächen 36′ versehenen, anschlußseitigen Endabschnitt 27/3′ des Sensors 27′ drückt.

Der Kontaktteil-Träger 44′ und die Gegenwand 45′ bestehen aus elektrisch isolierender Keramik und sind von gleicher Konfiguration; die Gestaltung dieser beiden gleichen Bauteile 44′ und 45′ wird deshalb am Beispiel des Kontaktteil-Trägers 44′ nachfolgend beschrieben:

Die dem Sensor 27′ zugewendete Vorderseite 48′ des Kontaktteil-Trägers 44′ ist mit mehreren angeformten Führungsstegen 50′ versehen, die der seitlichen Führung des anschlußseitigen Endabschnitts 27/3′ des Sensors 27′ und der Längsfixierung von Kontaktteil-Träger 44′ und Gegenwand 45′ dienen; die beispielsweise gewählten drei Führungsstege 50′ am Kontaktteil-Träger 44′ sind an den Seitenbereichen der Großfläche 39′ angeordnet und dabei zueinander derart versetzt, so daß sie mit den entsprechenden Führungsstegen 50′ der Gegenwand 45′ ineinanderkämmen.

Die Vorderseite 48′ des Kontaktteil-Trägers 44′ trägt die drei in Längsrichtung angeordneten, seitlich voneinander beabstandeten Kontaktteile 46′, die wie beim Ausführungsbeispiel gemäß der Figuren 1 und 3 aus im wesentlichen streifenförmigem Blech bestehen, eine elektrisch gut leitende, korrosionsfeste Beschichtung tragen (z.B. aus nur wenige »m dickem Gold oder Nickel) und anschlußseits auch auf gleiche Weise ausgebildet und am Kontaktteil-Träger 44′ mittels fingerförmiger Blechabschnitte 51′ festgelegt sind. Entsprechend der zu Figur 6 beschriebenen Anordnung der Kontaktflächen 36′ auf dem anschlußseitigen Endabschnitt 27/3′ des Sensors 27′ sind die Kontaktbereiche 70′ auf diesen Kontaktteilen 46′ ausgelegt; zur sicheren Auflage sind die Kontaktbereiche 70′ als zur jeweiligen Kontaktfläche 36′ des Sensors 27′ weisende warzenartige Erhebungen ausgebildet, die durch Prägen hergestellt sein können. Um die Auflage der Kontaktbereiche 70′ auf den genannten Kontaktflächen 36′ des Sensors 27′ zu verstärken, können anstelle dieser Kontaktbereiche 70′ der Kontaktteile 46′ oder auch zusätzlich flache Vorsprünge 71′ auf der Vorderseite 48′ des Kontaktteil-Trägers 44′ mit angeformt sein, und zwar jeweils unterhalb der Kontaktbereiche 70′ der Kontaktteile 46′.

Die Kontaktteile 46′ sind entsprechend ihrer zugeordneten Kontaktflächen 36′/1 bis 36′/3 bezeichnet mit 46′/1 bis 46′/3: Die Kontaktteile 46′/1 und 46′/2 sind dementsprechend die beiden seitlichen Kontaktteile und das Kontaktteil 46′/3 das auf einer gedachten Mittellinie des Kontaktteil-Trägers 44′ liegende, etwas meßgasseits befindliche Kontaktteil. Zur Erzielung eines möglichst großen Abstandes zwischen dem mittleren Kontaktteil 46′/3 und dem jeweiligen seitlichen Kontaktteil 46′/1 bzw. 46′/2 ist unterhalb des mittleren Kontaktteils 46′/3 im Bereich naheliegender Längsabschnitte der seitlichen Kontaktteile 46′/1 bzw. 46′/2 eine Längsnut 72′ in die Vorderseite 48′ des Kontaktteil-Trägers 44′ mit eingeformt und der betroffene Längsabschnitt des mittleren Kontaktteiles 46′/3 nahe des Bodens 73′ dieser Längsnut 72′ entlanggeführt; die Übergänge dieser Längsnut 72′ von der eigentlichen Vorderseite 48′ zu ihrem Boden 73′ verlaufen kontinuierlich. Zwecks Erleichterung der Montage derartiger Verbindungsstecker 43′ ist die Längsnut 72′ breiter als die vorwiegende Streifenbreite des mittleren Kontaktteiles 46′/3, doch das Kontaktteil 46′/3 ist in diesem Bereich beiderseits mit seitlichen Fixiervorsprüngen 74′ versehen. Der meßgasseitige Endabschnitt 53′/3 dieses Kontaktteiles 46′/3 ist um die meßgasseitige Stirnfläche 54′ des Kontaktteil-Trägers 44′ bis auf dessen Rückseite 55′ herumgebogen.

Die meßgasseitigen Endabschnitte 53′/1 bzw. 53′/2 der beiden seitlichen Kontaktteile 46′/1 bzw. 46′/2 enden bereits in dem Abstandsbereich, der zwischen den seitlichen Kontaktflächen 36′/1 bzw. 36′/2 und der mittleren Kontaktfläche 36′/3 des Sensors 27′ liegt; infolge dieser Maßnahme wird auch in diesem Bereich ein genügender Abstand zwischen den Kontaktteilen 36′ erzielt. Bei einer bevorzugten Ausführungsform, bei der der genannte Abstand noch vergrößert ist und die noch montagefreundlicher ist, ragen die meßgasseitigen Endabschnitte 53′/1 und 53′/2 in eine Aussparung 75′, die in die Vorderseite 48′ des Kontaktteil-Trägers 44′ mit eingeformt ist; bevorzugterweise ist diese Aussparung 75′ mit der bereits beschriebenen Längsnut 72′ verbunden, es kann jedoch auch für jeden Endabschnitt 53′/1 und 53′/2 jeweils eine eigene Aussparung vorgesehen werden.

Die anschlußseits befindlichen Abschnitte der beiden seitlichen Kontaktteile 46′/1 und 46′/2 sind jeweils mit einer seitlich nach außen weisenden, im Bereich der Längsnut 72′ beginnenden Kröpfung 78′ versehen und an die entsprechenden anschlußseitigen Bereiche des Kontaktteil-Trägers 44′ und der Gegenwand 45′ ist jeweils eine Verbreitung 79′ mit angeformt, um einen problemlosen Zusammenbau mit den notwendigen Anschlußleitern (siehe Figur 1, Position 57) zu ermöglichen. Die der Befestigung der Kontaktteile 46′/1 und 46′/2 dienenden Durchbrüche 52′ im Kontaktteil-Träger 44′ und in der Gegenwand 45′ sind in ihrer Lage der Lage der fingerförmigen Blechabschnitte 51′ dieser gekröpten Kontaktteile 46′/1 und 46′/2 angepaßt.

Das Federelement 47′, das in diesem Beispiel aus einem einteiliger jedoch zweilagigem Streifen gebildet ist, liegt bei diesem Verbindungsstecker 43′ auf jeweils einer Nase 77′ auf, die auf den rückseitigen Erhöhungen 60′ des Kontaktteil-Trägers 44′ und der Gegenwand 45′ noch mit angeformt sind, und zwar derart, so daß die von dem mechanisch vorgespannten Federelement 47′ ausgeübte Kraft gleichmäßig auf die sechs Kontaktbereiche 70′ des Verbindungssteckers 43′ verteilt ist.

Zur Längsfixierung des Sensors 27′ ist auf der Vorderseite 48′ des Kontaktteil-Trägers 44′ ein vorstehender Anschlag 76′ mit angeformt, an dem die anschlußseitige Stirnfläche 42′ anliegen soll; ein solcher Anschlag kann auch an der Gegenwand 45′ vorgesehen werden.

Im übrigen entspricht der Verbindungsstecker 43′ gemäß der Figuren 7 bis 9 dem Verbindungsstecker 43 gemäß der Figuren 1, 3 bis 5. Sofern ein solcher Verbindungsstecker 43, 43′ besonders schüttelfest innerhalb der Metallhülse 67 des Gasmeßfühlers 10 gehalten werden soll (siehe Figur 1), so kann er mit einer (nicht dargestellten) im Querschnitt im wesentlichen U-förmigen Stützhülse versehen werden, die aus dünnem Federstahlblech gebogen ist, den Verbindungsstecker 43, 43′ auf einem Großteil seines Umfangs umfaßt und ausgescherte, schräg nach außen gebogene Stege besitzt, die sich mit ihren unter mechanischer Vorspannung stehenden freien Enden an der Innenseite der Metallhülse 67 abstützen.

## Patentansprüche

1. Gasmeßfühler (10), insbesondere Gasmeßfühler zur Bestimmung des Sauerstoffgehaltes in Abgasen von Brennkraftmaschinen, mit einem rohrförmigen Metallgehäuse (11), das Mittel (12, 13, 14) für den abdichtenden Einbau in eine Meßgasleitung besitzt und in seiner Längsbohrung (19) zumindest einen Längsabschnitt eines axial verlaufenden Sensors (27) enthält, der von länglicher, planarer Form ist, elektrisch gegenüber dem Metallgehäuse (11) isoliert ist, mittels einer quer in der Längsbohrung (19) des Metallgehäuses (11) befindlichen Dichtung (30) in einen meßgasseitigen Abschnitt (27/1) und einen anschlußseitigen Abschnitt (27/2) unterteilt ist, auf dem Endabschnitt (27/3) seines anschlußseitigen Abschnitts (27/2) auf mindestens einer seiner Großflächen (39) mindestens eine schichtförmige, elektrisch leitfähige Kontaktfläche (36) trägt, welche über eine Leiterbahn (37) mit einem Sensorelement (38) bzw. einem schichtförmigen Heizelement in elektrischer Verbindung steht und auf die ein zu einem Verbindungsstecker (43) gehörendes, elektrisch leitfähiges Kontaktteil (46) drückt, das anschlußseits mit einem Anschlußleiter (57) des Gasmeßfühlers (10) in elektrischer Verbindung steht und an einem elektrisch isolierenden, auch zum Verbindungsstecker (43) gehörenden Kontaktteil-Träger (44) angeordnet ist, wobei der Verbindungsstecker (43) außerdem eine elektrisch isolierende Gegenwand (45) hat, die an der zweiten Großfläche (40) des Endabschnitts (27/3) des anschlußseitigen Abschnitts (27/2) des Sensors (27) angeordnet ist und mit dem genannten Kontaktteil-Träger (44) zusammenwirkt, dadurch gekennzeichnet, daß der Kontaktteil-Träger (44) und die Gegenwand (45) des Verbindungssteckers (43) zwei von einander beabstandete, parallel zum Sensor (27) stehende, elektrisch isolierende Bauteile sind, die jeweils mit ihrer Vorderseite (48, 49) einer Großfläche (39, 40) des Sensors (27) zugewendet sind, wobei die Vorderseite (48) des Kontaktteil-Trägers (44), das mindestens eine Kontaktteil (46) trägt, das auf einer zugeordneten Kontaktfläche (36) auf dem Sensor (27) aufliegt, und daß ein ringartiges Federelement (47) vorgesehen ist, das den Kontaktteil-Träger (44) und die Gegenwand (45) des Verbindungssteckers (43) im Bereich des zwischen beiden angeordneten Endabschnitts (27/3) des anschlußseitigen Abschnitts (27/2) des Sensors (27) mechanisch vorgespannt umfaßt und in seiner Umfangserstreckung eine Unterbrechung (59) hat.

2. Gasmeßfühler nach Anspruch 1, dadurch gekennzeichnet, daß die der Unterbrechung (59) des ringartigen Federelementes (47) naheliegenden Endabschnitte (61) des Federelementes (47) vom Verbindungsstecker (43) radial wegweisen.

3. Gasmeßfühler nach Anspruch 1 oder 2, dadurch gekennzeichnet, daß das ringartige Federelement (47) aus Streifenmaterial besteht.

4. Gasmeßfühler nach einem der Ansprüche 1 bis 3, dadurch gekennzeichnet, daß koaxial über dem ringartigen Federelement (47) ein zweites derartiges, unter mechanischer Vorspannung stehendes ringartiges Federelement (62) angeordnet ist.

5. Gasmeßfühler nach einem der vorangehenden Ansprüche, dadurch gekennzeichnet, daß der Kontaktteil-Träger (44) und die Gegenwand (45) des Verbindungssteckers (43) jeweils auf ihrer vom Sensor (27) wegweisenden Rückseite (55) mindestens eine angeformte Erhöhung (60) aufweisen, auf der das Federelement (47) mit seiner Innenseite aufliegt.

6. Gasmeßfühler nach einem der vorangehenden Ansprüche, dadurch gekennzeichnet, daß der Kontaktteil-Träger (44) und/oder die Gegenwand (45) des Verbindungssteckers (43) auf der vom Sensor (27) wegweisenden Rückseite (55) einen angeformten Vorsprung (63) zur Längsfixierung des Federelements (47) hat.

7. Gasmeßfühler nach einem der vorangehenden Ansprüche, dadurch gekennzeichnet, daß der Kontaktteil-Träger (44) und/oder die Gegenwand (45) des Verbindungssteckers (43) auf der dem Sensor (27) zugewendeten Vorderseite (48, 49) angeformte Führungsstege (50) aufweisen, die jeweils an den Schmalseiten (41) des Sensors (27) anliegen.

8. Gasmeßfühler nach einem der vorhergehenden Ansprüche, dadurch gekennzeichnet, daß der Kontaktteil-Träger (44′) und/oder die Gegenwand (45′) des Verbindungssteckers (43′) an der dem Sensor (27′) zugewendeten Vorderseite (48′) einen für die Längsfixierung des Sensors (27′) dienenden, angeformten Anschlag (76′) hat.

9. Gasmeßfühler nach einem der vorangehenden Ansprüche, dadurch gekennzeichnet, daß auch die Gegenwand (45) des Verbindungssteckers (43) auf ihrer dem Sensor (27) zugewendeten Vorderseite (49) mit mindestens einem Kontaktteil (46) versehen ist, das jeweils mit einer Kontaktfläche (36) auf dem Endabschnitt (27/3) des anschlußseitigen Abschnitts (27/2) des Sensors (27) zusammenwirkt.

10. Gasmeßfühler nach einem der vorangehenden Ansprüche, dadurch gekennzeichnet, daß die Kontaktteile (46) aus streifenförmigem Blech geformt sind und zu ihrer Festlegung am Kontaktteil-Träger (44) des Verbindungssteckers (43) angeformte Blechabschnitte (51) aufweisen.

11. Gasmeßfühler nach einem der vorstehenden Ansprüche, dadurch gekennzeichnet, daß jedes Kontaktteil (46′) einen in Richtung auf die zugeordnete Kontaktfläche (36′) des Sensors (27′) weisenden erhabenen Kontaktbereich (70′) hat.

12. Gasmeßfühler nach einem der vorangehenden Ansprüche, dadurch gekennzeichnet, daß die Kontaktteile (46) des Verbindungssteckers (43) mit einer elektrisch leitenden, korrosionsbeständigen Beschichtung (z. B. aus Gold) versehen sind.

13. Gasmeßfühler nach einem der Ansprüche 10 oder 12, dadurch gekennzeichnet, daß die Kontaktteile (46) des Verbindungssteckers (43) anschlußseits zwischen dem Kontaktteil-Träger (44) und der Gegenwand (45) des Verbindungssteckers (43) herausragen und in diesem Bereich Verbindungsstellen (56) mit zugeordneten Anschlußleitern (57) haben.

14. Gasmeßfühler nach einem der vorstehenden Ansprüche, dadurch gekennzeichnet, daß der Kontaktteil-Träger (44′) und/oder die Gegenwand (45′) des Verbindungssteckers (43′) auf der dem Sensor (27′) zugewendeten Vorderseite (48′) drei im wesentlichen streifenförmige, seitlich voneinander beabstandete Kontaktteile (46′) trägt, von denen an jeder Längsseite des Kontaktteil-Trägers (44′) und/oder der Gegenwand (45′) eines dieser Kontaktteile (46′/1, 46′/2) angeordnet ist und das jeweils dritte Kontaktteil (46′/3) zwischen den beiden vorgenannten Kontaktteilen (46′/1, 46′/2) längs verläuft, meßgasseits mit seinem Kontaktbereich (70′) weiter vorragt als die Kontaktbereiche (70′) der beiden anderen Kontaktteile (46′/1, 46′/2) und streckenweise in einer Längsnut (72′) entlang führt, die in die Vorderseite (48′) des Kontaktteil-Trägers (44′) und/oder der Gegenwand (45′) mit eingeformt ist und sich zumindest im Bereich naheliegender Längsabschnitte der an den Längsseiten des Kontaktteil-Trägers (44′) und/oder der Gegenwand (45′) angeordneten Kontaktteile (46′/1, 46′/2) befindet, und daß die meßgasseitigen Endabschnitte (53′/1, 53′/2) der beiden an den Längsseiten des Kontaktteil-Trägers (44′) und/oder der Gegenwand (45′) liegenden Kontaktteile (46′/1, 46′/2) mit Abstand von der jeweils mittleren Kontaktfläche (36′/3) des Sensors (27′) enden, bevorzugt in Aussparungen (75′) ragen, die in die Vorderseite (48′) des Kontaktteil-Trägers (44′) und/oder der Gegenwand (45′) eingeformt sind, und daß der planare Sensor (27′) auf dem anschlußseitigen Abschnitt seiner Großflächen (39′ und/oder 40′) für mindestens ein Sensorelement und gegebenenfalls mindestens ein Heizelement Kontaktflächen (36′) aufweist, die untereinander beabstandet sind und in ihrer Lage der Lage der Kontaktbereiche (70′) des Verbindungssteckers (43′) entsprechen.

15. Gasmeßfühler nach Anspruch 14, dadurch gekennzeichnet, daß der Kontaktteil-Träger (44′) und die Gegenwand (45′) an ihrem anschlußseitigen Längsbereich eine Verbreiterung (79′) aufweisen und die anschlußseitigen Längsbereiche der jeweils beiden seitlich angeordneten Kontaktteile (46′/1, 46′/2) über eine noch im Bereich der Längsnut (72′) befindliche Kröpfung (78′) dieser Verbreiterung (79′) folgen.

16. Gasmeßfühler nach einem der Ansprüche 14 oder 15, dadurch gekennzeichnet, daß die an der Rückseite (55′) des Kontaktteil-Trägers (44′) und der Gegenwand (45′) angeformten Erhöhungen (60′) jeweils eine diese Erhöhungen (60′) noch überragende Nase (77′) hat, auf denen das ringförmige Federelement (47′) aufliegt und die derart angeordnet ist, so daß die vom Federelement (47′) ausgeübte Kraft gleichmäßig auf die Kontaktbereiche (70′) verteilt ist.

17. Gasmeßfühler nach einem der vorangehenden Ansprüche, dadurch gekennzeichnet, daß die Vorderseite (48′) des Kontaktteil-Trägers (44′) und/oder der Gegenwand (45′) unter den anliegenden Kontaktbereichen (70′) der Kontaktteile (46′) flache Vorsprünge (71′) hat.

18. Gasmeßfühler nach einem der vorangehenden Ansprüche, dadurch gekennzeichnet, daß die Verbindungsstellen (56) der Kontaktteile (46) und Anschlußleiter (57) jeweils in einem Durchgangsloch (64) eines elastischen, stopfenartigen Formteils (65) angeordnet sind.

19. Gasmeßfühler nach Anspruch 18, dadurch gekennzeichnet, daß das elastische Formteil (65) von einem Längsabschnitt (67/1) einer anschlußseits am Metallgehäuse (11) befestigten Metallhülse (67) abdichtend umfaßt ist und auch die Anschlußleiter (57) in den Durchgangslöchern (64) des Formteils (65) abdichtend umfaßt sind.

## Claims

1. Gas measurement probe (10), in particular gas measurement probe for determining the oxygen content exhaust gases of internal-combustion engines, having a tubular metal housing (11) which has means (12, 13, 14) for sealed installation in a line carrying a gas to be measured and contains, in its longitudinal bore (19), at least one longitudinal section of an axially extending sensor (27) which is of elongated, planar shape, is electrically insulated from the metal housing (11), is subdivided into a section (27/1) on the side of the gas to be measured and a section (27/2) on the connection side by a seal (30) located transversely in the longitudinal bore (19) of the metal housing (11), and carries on the end section (27/3) of its section (27/2) which is on the connection side, on at least one of its large surfaces (39), at least one layer-like electrically conductive contact surface (36) which is electrically connected via a conductive track (37) to a sensor element (38) or to a layer-like heating element and on which an electrically conductive contact part (46) belonging to a plug connector (43) presses, which contact part is electrically connected on the connection side to a connection conductor (57) of the gas measurement probe (10) and is arranged on an electrically insulating contact-part carrier (44) also belonging to the plug connector (43), the plug connector (43) furthermore having an electrically insulating counter-wall (45) which is arranged on the second large surface (40) of the end section (27/3) of the connection-side section (27/2) of the sensor (27) and cooperates with the said contact-part carrier (44), characterized in that the contact-part carrier (44) and the counter-wall (45) of the plug connector (43) are two mutually separated electrically insulating components which are parallel to the sensor (27), each of which components faces a large surface (39, 40) of the sensor (27) via their front side (48, 49), the front side (48) of the contact-part carrier (44), which carries at least one contact part (46), resting on an associated contact surface (36) on the sensor (27), and in that an annular spring element (47) is provided which encloses, with mechanical prestressing, the contact-part carrier (44) and the counter-wall (45) of the plug connector (43) in the region of the end section (27/3), of the connection-side section (27/2) of the sensor (27), which lies between them and has an interruption (59) in its circumferential extent.

2. Gas measurement probe according to Claim 1, characterized in that the end sections (61) of the spring element (47), which are in proximity to the interruption (59) in the annular spring element (47), point radially away from the plug connector (43).

3. Gas measurement probe according to Claim 1 or 2, characterized in that the annular spring element (47) consists of strip-type material.

4. Gas measurement probe according to one of Claims 1 to 3, characterized in that, coaxially over the annular spring element (47), a second such annular spring element (62) is arranged under mechanical prestress.

5. Gas measurement probe according to one of the preceding claims, characterized in that the contact-part carrier (44) and the counter-wall (45) of the plug connector (43) each have at least one integrally moulded prominence (60) on their rear side (55) which points away from the sensor (27), on which prominence the spring element (47) rests via its internal side.

6. Gas measurement probe according to one of the preceding claims, characterized in that the contact-part carrier (44) and/or the counter-wall (45) of the plug connector (43) has, on the rear side (55) pointing away from the sensor (27), an integrally moulded projection (63) for longitudinal fastening of the spring element (47).

7. Gas measurement probe according to one of the preceding claims, characterized in that the contact-part carrier (44) and/or the counter-wall (45) of the plug connector (43) have integrally moulded guide webs (50) on the front side (48, 49) facing the sensor (27), which webs rest in each case on the narrow sides (41) of the sensor (27).

8. Gas measurement probe according to one of the preceding claims, characterized in that the contact-part carrier (44′) and/or the counter-wall (45′) of the plug connector (43′) has, on the front side (48′) facing the sensor (27′), an integrally moulded stop (76′) serving for longitudinal fastening of the sensor (27′).

9. Gas measurement probe according to one of the preceding claims, characterized in that the counter-wall (45) of the plug connector (43) is also provided, on its front side (49) facing the sensor (27), with at least one contact part (46) which in each case cooperates with a contact surface (36) on the end section (27/3) of the connection-side section (27/2) of the sensor (27).

10. Gas measurement probe according to one of the preceding claims, characterized in that the contact parts (46) are formed from strip-type sheet metal and have integrally moulded sheet-metal sections (51) for fixing them to the contact-part carrier (44) of the plug connector (43).

11. Gas measurement probe according to one of the previous claims, characterized in that each contact part (46′) has a raised contact region (70′) pointing in the direction towards the associated contact surface (36′) of the sensor (27′).

12. Gas measurement probe according to one of the preceding claims, characterized in that the contact parts (46) of the plug connector (43) are provided with an electrically conductive corrosion-resistant coating (e.g. of gold).

13. Gas measurement probe according to one of Claims 10 or 12, characterized in that the contact parts (46) of the plug connector (43) project on the connection side between the contact-part carrier (44) and the counter-wall (45) of the plug connector (43) and have in this region connection points (56) with associated connection conductors (57).

14. Gas measurement probe according to one of the previous claims, characterized in that the contact-part carrier (44′) and/or the counter-wall (45′) of the plug connector (43′) carries, on the front side (48′) facing the sensor (27′), three essentially strip-type mutually laterally separated contact parts (46′), of which one of these contact parts (46′/1, 46′/2) is arranged on each longitudinal side of the contact-part carrier (44′) and/or the counter-wall (45′) and the respective third contact part (46′/3) extends longitudinally between the two aforementioned contact parts (46′/1, 46′/2), projects, via its contact region (70′), from the side of the gas to be measured further than the contact regions (70′) of the other two contact parts (46′/1, 46′/2), and runs in places along a longitudinal groove (72′) which is integrally moulded in the front side (48′) of the contact-part carrier (44′) and/or the counter-wall (45′) and is located at least in the region of adjacent longitudinal sections of the contact parts (46′/1, 46′/2) arranged on the longitudinal sides of the contact-part carrier (44′) and/or the counter-wall (45′) and in that the end sections (53′/1, 53′/2), on the side of the gas to be measured, of the two contact parts (46′/1, 46′/2) lying on the longitudinal sides of the contact-part carrier (44′) and/or the counter-wall (45′) terminate at a distance from the respective central contact surface (36′/3) of the sensor (27′), preferably project into recesses (75′) which are integrally moulded in the front side (48′) of the contact-part carrier (44′) and/or the counter-wall (45′), and in that the planar sensor (27′) has, on the connection-side section of its large surfaces (39′ and/or 40′), contact surfaces (36′) for at least one sensor element and, optionally, at least one heating element, which contact surfaces are mutually separated and correspond in their position to the position of the contact regions (70′) of the plug connector (43′).

15. Gas measurement probe according to Claim 14, characterized in that the contact-part carrier (44′) and the counter-wall (45′) have a widened part (79′) on their connection-side longitudinal region and the connection-side longitudinal regions of the respective two laterally arranged contact parts (46′/1, 46′/2) follow this widened part (79′) via a corner offset (78′) still located in the region of the longitudinal groove (72′).

16. Gas measurement probe according to one of Claims 14 or 15, characterized in that the prominences (60′) integrally moulded on the rear side (55′) of the contact-part carrier (44′) and the counter-wall (45′) in each case have a nose (77′) projecting further than these prominences (60′), on which nose the annular spring element (47′) rests and which nose is arranged such that the force exerted by the spring element (47′) is distributed uniformly over the contact regions (70′).

17. Gas measurement probe according to one of the preceding claims, characterized in that the front side (48′) of the contact-part carrier (44′) and/or the counter-wall (45′) have flat projections (71′) under the adjacent contact regions (70′) of the contact parts (46′).

18. Gas measurement probe according to one of the preceding claims, characterized in that the connection points (56) of the contact parts (46) and the connection conductors (57) are in each case arranged in a through-hole (64) of an elastic stopper-type moulded part (65).

19. Gas measurement probe according to Claim 18, characterized in that the elastic moulded part (65) is enclosed leaktightly by a longitudinal section (67/1) of a metal casing (67) fastened on the connection side of the metal housing (11) and the connection conductors (57) are also enclosed leaktightly in the through-holes (64) of the moulded part (65).

## Revendications

1. Capteur de gaz à mesurer (10), en particulier capteur de gaz à mesurer pour déterminer la teneur en oxygène dans les gaz à mesurer d'échappement de moteurs à combustion interne, avec un boîtier métallique en forme de tube (11), qui possède des moyens (12, 13, 14) pour le montage étanche dans une conduite de gaz à mesurer et contient dans son alésage longitudinal (19) au moins une section longitudinale d'un détecteur (27) qui s'étend axialement, qui a une forme allongée plane, et qui est isolé électriquement par rapport au boîtier métallique (11), qui est divisé au moyen d'un joint d'étanchéité (30) se trouvant perpendiculairement dans l'alésage longitudinal (19) du boîtier métallique (11), en une section (27/1) qui se trouve du côté des gaz à mesurer et une section (27/2) qui est située du côté du raccordement, qui porte sur la section terminale (27/3) de sa section (27/2), située du côté du raccordement, sur au moins l'une de ses grandes surfaces (39), au moins une surface de contact (36) en forme de couche, conduisant l'électricité, qui est en liaison par une piste conductrice (37) avec un élément de détecteur (38) ou avec un élément chauffant en forme de couche et sur laquelle appuie une pièce de contact (46) qui fait partie d'une fiche de liaison (43) et est conductrice de l'électricité, pièce de contact qui est en liaison électrique, du côté du raccordement, avec un conducteur de raccordement (57) du capteur de gaz à mesurer (10) et est disposée sur un support de pièces.de contact (44) électriquement isolant et fait aussi partie de la fiche de liaison (43), capteur de gaz à mesurer dans lequel la fiche de liaison (43) a en outre une contre-paroi (45) isolante électriquement, qui est disposée sur la seconde grande surface (40) de la section terminale (27/3) de la section (27/2), située du côté du raccordement, du détecteur (27), et coopère avec le support de pièces de contact mentionné (44), capteur de gaz à mesurer caractérisé en ce que le support de pièces de contact (44) et la contre-paroi (45) de la fiche de liaison (43) sont deux pièces constitutives, situées à une certaine distance l'une de l'autre, se tenant parallèlement au détecteur (27), isolantes électriquement, qui sont respectivement tournées par leurs faces antérieures (48, 49) vers une grande surface (39, 40) du détecteur (27), la face antérieure (48) du support de pièces de contact (44) portant au moins l'une des pièces de contact (46) qui repose par une surface de contact correspondante (36) sur le détecteur (27), et en ce qu'il est prévu un élément élastique de type annulaire (47) qui entoure le support de pièces de contact (44) et la contre-paroi (45) de la fiche de liaison (43) dans la zone comprise entre les deux sections terminales (27/3) de la section (27/2) du détecteur (27), qui est située du côté du raccordement en étant mécaniquement précontrainte, et a une ouverture (59) sur son pourtour.

2. Capteur de gaz à mesurer selon la revendication 1, caractérisé en ce que les sections terminales (61) de l'élément élastique (47) de la fiche de liaison (43), qui se trouvent près de l'ouverture (59) de l'élément élastique de type annulaire (47), s'écartent radialement.

3. Capteur de gaz à mesurer selon la revendication 1 ou 2, caractérisé en ce que l'élément élastique de type annulaire (47) est réalisé en une matière en forme de bande.

4. Capteur de gaz à mesurer selon l'une des revendications 1 à 3, caractérisé en ce que l'on dispose de façon coaxiale sur l'élément élastique de type annulaire (47), un second élément élastique (62) du même type se trouvant mécaniquement sous contrainte.

5. Capteur de gaz à mesurer selon l'une des revendications précédentes, caractérisé en ce que le support de pièces de contact (44) et la contre-paroi (45) de la fiche de liaison (43) présentent respectivement sur leur face arrière (55) s'écartant du détecteur (27), au moins une élévation (60) formée en même temps, sur laquelle repose l'élément élastique (47) par son côté intérieur.

6. Capteur de gaz à mesurer selon l'une des revendications précédentes, caractérisé en ce que le support de pièces de contact (44) et/ou la contre-paroi (45) de la fiche de liaison (43) ont sur la face arrière (55) tournée à l'opposé du détecteur (27), une saillie formée en même temps (63) servant à la fixation longitudinale de l'élément élastique (47).

7. Capteur de gaz à mesurer selon l'une des revendications précédentes, caractérisé en ce que le support de pièces de contact (44) et/ou la contre-paroi (45) de la fiche de liaison (43) présentent sur la face antérieure (48, 49) tournée vers le détecteur (27), des pattes de guidage formées en même temps (50) qui reposent respectivement sur les côtés étroits (41) du détecteur (27).

8. Capteur de gaz à mesurer selon l'une des revendications précédentes, caractérisé en ce que le support de pièces de contact (44′) et/ou la contre-paroi (45′) de la fiche de liaison (43′) a sur la face antérieure (48′) qui est tournée vers le détecteur (27′), une butée, formée en même temps, (76′) qui sert à la fixation longitudinale du détecteur (27′).

9. Capteur de gaz à mesurer selon l'une des revendications précédentes, caractérisé en ce que même la contre-paroi (45) de la fiche de liaison (43) est pourvue sur sa face antérieure (49), tournée vers le détecteur (27), d'au moins une pièce de contact (46) qui coopère respectivement avec une surface de contact (36) sur la section terminale (27/3) de la section (27/2) du détecteur (27), qui est située du côté du raccordement.

10. Capteur de gaz à mesurer selon l'une des revendications précédentes, caractérisé en ce que les pièces de contact (46) sont formées à partir d'une tôle en forme de bande et présentent des sections de tôle (51), formées en même temps, qui servent à leur fixation sur le support de pièces de contact (44) de la fiche de liaison (43).

11. Capteur de gaz à mesurer selon l'une des revendications précédentes, caractérisé en ce que chaque pièce de contact (46′) a une zone de contact (70′) orientée dans le sens de la surface de contact correspondante (36′) du détecteur (27′).

12. Capteur de gaz à mesurer selon l'une des revendications précédentes, caractérisé en ce que les pièces de contact (46) de la fiche de liaison (43) sont pourvues d'un revêtement (par exemple en or) conduisant l'électricité et qui résiste à la corrosion.

13. Capteur de gaz à mesurer selon l'une des revendications 10 ou 12, caractérisé en ce que les pièces de contact (46) de la fiche de liaison (43) font saillie du côté du raccordement entre le support de pièces de contact (44) et la contre-paroi (45) de la fiche de liaison (43), et ont dans cette zone des points de liaison (56) avec des conducteurs de raccordement correspondants (57).

14. Capteur de gaz à mesurer selon l'une des revendications précédentes, caractérisé en ce que le support de pièces de contact (44′) et/ou la contre-paroi (45′) de la fiche de liaison (43′), porte sur la face antérieure (48′) qui est tournée vers le détecteur (27′), trois pièces de contact (46′) sensiblement en forme de bande, situées latéralement à une certaine distance les unes des autres, dont l'une de ces pièces de contact (46′/1, 46′/2) est disposée sur chaque côté longitudinal du support de pièces de contact (44′) et/ou de la contre-paroi (45′), et la troisième pièce de contact respectivement (46′/3) s'étend longitudinalement entre les deux pièces de contact mentionnées (46′/1, 46′/2), fait davantage saillie du côté des gaz à mesurer, par sa zone de contact (70′), que les zones de contact (70′) des deux pièces de contact (46′/1, 46′/2) et est guidée dans une rainure longitudinale (72′), formée en même temps dans la face antérieure (48′) du support de pièces de contact (44′) et/ou de la contre-paroi (45′), en se trouvant au moins dans la zone des sections longitudinales voisines des pièces de contact (46′/1, 46′/2) disposées sur les côtés longitudinaux du support de pièces de contact (44′) et/ou de la contre-paroi (45′), et en ce que les sections terminales (53′/1, 53′/2) qui sont situées du côté des gaz à mesurer, des deux pièces de contact (46′/1, 46′/2) qui se trouvent sur les côtés longitudinaux du support de pièces de contact (44′),et/ou de la contre-paroi (45′) se terminent à une certaine distance de la surface de contact respectivement médiane (36′/3) du détecteur (27′), pénètrent de préférence dans des évidements (75′) qui sont formés dans la face antérieure (48′) du support de pièces de contact (44′) et/ou de la contre-paroi (45′), et en ce que le détecteur plan (27′) présente sur la section de sa grande surface (39′ et/ou 40′) qui se trouve du côté du raccordement, des surfaces de contact (36′) pour au moins un élément de détecteur et le cas échéant au moins un élément chauffant, surfaces de contact qui sont à une certaine distance les unes des autres et correspondent, par leur position, à la position des zones de contact (70′) de la fiche de liaison (43′).

15. Capteur de gaz à mesurer selon la revendication 14, caractérisé en ce que le support de pièces de contact (44′) et la contre-paroi (45′) présentent dans leur zone longitudinale située du côté du raccordement, un élargissement (79′), et les zones longitudinales, situées du côté du raccordement, des deux pièces respectives de contact (46′/1, 46′/2) disposées latéralement font suite par un coude (78′), qui se trouve encore dans la zone de la rainure longitudinale (72′), à cet élargissement.

16. Capteur de gaz à mesurer selon l'une des revendications 14 ou 15, caractérisé en ce que les élévations (60′) qui sont formées sur la face arrière (55′) du support de pièces de contact (44′) et de la contre-paroi (45′), ont encore respectivement pour l'une de ces élévations (60′ un nez en saillie (77′), sur lequel l'élément élastique de forme annulaire (47′) repose, et qui est disposé de telle façon que la force exercée par l'élément élastique (47′) soit répartie régulièrement sur les zones de contact (70′).

17. Capteur de gaz à mesurer selon l'une des revendications précédentes, caractérisé en ce que la face antérieure (48′) du support de pièces de contact (44′) et/ou de la contre-paroi (45′), a des saillies plates (71′) sous les zones de contact adjacentes (70′) des pièces de contact (46′).

18. Capteur de gaz à mesurer selon l'une des revendications précédentes, caractérisé en ce que les points de liaison (56) des pièces de contact (46) et des conducteurs de raccordement (57) sont disposés respectivement dans un trou de passage (64) d'une pièce usinée élastique (65) en forme de bouchon.

19. Capteur de gaz à mesurer selon la revendication 18, caractérisé en ce que la pièce usinée élastique (65) est entourée de façon étanche par une section longitudinale (67/1) d'une douille métallique (67) fixée sur le boîtier métallique (11), et en ce que les conducteurs de raccordement (57) sont aussi entourés de façon étanche dans les trous de passage (64) de la pièce usinée (65).
